# EUROPÄISCHE PATENTSCHRIFT

(11) **EP 2 553 227 B1**
(45) Veröffentlichungstag und Bekanntmachung des Hinweises auf die Patenterteilung: **18.05.2016**
(21) Anmeldenummer: 11712797.7
(22) Anmeldetag: 22.03.2011
(51) Int. Cl.: F01N 13/00, F01N 3/20, F01N 3/08, F01N 3/10

(54) **VERFAHREN ZUM BETRIEB EINER ABGASBEHANDLUNGSVORRICHTUNG**
METHOD OF OPERATING AN EXHAUST AFTERTREATMENT SYSTEM
PROCÉDÉ DE FONCTIONNEMENT D'UN DISPOSITIF DE TRAITEMENT DE GAZ D'ÉCHAPPEMENT

(30) Priorität: 01.04.2010 DE 102010013696
(43) Veröffentlichungstag der Anmeldung: 06.02.2013
(73) Patentinhaber: Continental Automotive GmbH, 30165 Hannover (DE)
(72) Erfinder: HODGSON, Jan, 53840 Troisdorf (DE); KONIECZNY, Jörg-Roman, 53804 Much (DE); BRÜCK, Rolf, 51429 Bergisch Gladbach (DE)
(86) Internationale Anmeldenummer: PCT/EP2011/054309
(87) Internationale Veröffentlichungsnummer: WO 2011/120838

(56) Entgegenhaltungen:
- WO-A1-2005/073528
- DE-A1-102006 041 135
- DE-A1-102007 060 623
- US-A1- 2004 098 979

## Beschreibung

Die Erfindung betrifft ein Verfahren zum Betrieb einer Abgasbehandlungsvorrichtung für eine Verbrennungskraftmaschine, aufweisend zumindest eine Heizung und zumindest eine Zufuhreinrichtung für ein Reduktionsmittel.

Zur Reduzierung der Schadstoffe in den Abgasen von Verbrennungskraftmaschinen werden seit langem Abgasbehandlungsvorrichtungen eingesetzt. Abgasbehandlungsvorrichtungen mit einer Zufuhr für ein Reduktionsmittel sind seit einiger Zeit üblich, um Schadstoffe im Abgas einer Verbrennungskraftmaschine wirkungsvoll zu reduzieren. Es hat sich herausgestellt, dass es insbesondere bei mager betriebenen Verbrennungskraftmaschinen vorteilhaft sein kann, dem Abgas ein Reduktionsmittel zuzuführen. Insbesondere der Anteil an Stickoxidverbindungen (NOₓ) im Abgas ist bei mager betriebenen Verbrennungskraftmaschinen erhöht und kann in Verbindung mit einem Reduktionsmittel in einer Abgasbehandlungsvorrichtung reduziert werden. Man spricht vom Verfahren der selektiven katalytischen Reduktion (SCR-Verfahren).

Als Reduktionsmittel kann beispielsweise Ammoniak verwendet werden. Ammoniak wird mit den Stickoxidverbindungen im Abgas in unschädliche Bestandteile, nämlich in Stickstoff sowie Wasser und Kohlendioxid, umgesetzt. Ammoniak wird im Kraftfahrzeug normalerweise nicht direkt bevorratet. Normalerweise wird ein Reduktionsmittelvorläufer, der bedarfsgerecht in das eigentliche Reduktionsmittel umgesetzt wird, bevorratet und/oder zugeführt. Als derartiger Reduktionsmittelvorläufer kann beispielsweise Harnstoff dienen. Besonders bevorzugt ist eine wässrige Harnstofflösung. Eine derartige wässrige Harnstofflösung mit einem Harnstoffgehalt von 32,5 % ist beispielsweise unter dem Handelsnamen AdBlue^{®} erhältlich.

Ein Reduktionsmittel kann einer Abgasbehandlungsvorrichtung einer Verbrennungskraftmaschine flüssig und/oder gasförmig zugeführt werden. Normalerweise ist ein Reduktionsmittel in einem Kraftfahrzeug flüssig gelagert. Eine derartige flüssige Lagerung ist besonders platzsparend möglich. Flüssiges Reduktionsmittel muss, bevor es einer Abgasbehandlungsvorrichtung gasförmig zugeführt werden kann, zumeist zunächst verdampft werden. Bei der flüssigen Zufuhr von Reduktionsmittel muss die Verdampfung des Reduktionsmittels in der Abgasbehandlungsvorrichtung erfolgen. Hierzu sind ausreichend hohe Abgastemperaturen notwendig.

Mager betriebene Verbrennungskraftmaschinen werden mit einem Kraftstoff-Luft-Gemisch betrieben, bei welchem mehr Luft zugeführt wird als für die vollständige Umsetzung des zugeführten Kraftstoffes notwendig ist. Derartige Verbrennungskraftmaschinen sind insbesondere moderne Diesel-Motoren. Bei derartigen Verbrennungskraftmaschinen liegen aber oft besonders niedrige Abgastemperaturen vor. Bei flüssiger Zufuhr von Reduktionsmittel zum Abgas kühlt das Reduktionsmittel das Abgas noch weiter ab. Das flüssige Reduktionsmittel wird im Abgas normalerweise verdampft. Dabei wird dem Abgas die Verdampfungsenergie des Reduktionsmittels entzogen.

Die Umsetzung der Schadstoffe in einer Abgasbehandlungsvorrichtung hängt vorrangig auch von der Temperatur der Abgase ab. Die meisten Umsetzungsvorgänge von Schadstoffen, wie beispielsweise Stickoxid, Kohlenmonoxid oder Rußpartikel (Kohlenstoffpartikel), laufen bei hohen Abgastemperaturen erheblich schneller ab als bei niedrigen Abgastemperaturen. Unterhalb spezifischer Grenztemperaturen, die für verschiedene Umsetzungsvorgänge unterschiedlich sind, laufen bestimmte Umsetzungsvorgänge überhaupt nicht mehr ab.

Aus diesem Grunde ist es insbesondere bei Abgasbehandlungsvorrichtungen für mager betriebene Verbrennungskraftmaschinen bekannt, in den Abgasbehandlungsvorrichtungen Abgasheizer vorzusehen. Abgasheizer wurden ursprünglich entwickelt, um beim Kaltstart einer Verbrennungskraftmaschine das Abgassystem schnell aufzuheizen. Derartige Abgasheizer können beispielsweise in Form von Heizspiralen, die in der Abgasleitung montiert sind, eingerichtet sein. Es sind aus dem Stand der Technik allerdings auch elektrisch beheizbare Wabenkörper bekannt, bei welchen Pakete aus mehreren zumindest teilweise strukturierten metallischen Folien von einem elektrischen Strom durchflossen werden. Derartige elektrisch beheizbare Wabenkörper haben den Vorteil, dass diese eine wesentlich größere Oberfläche aufweisen, über welche sie die erzeugte Wärme an das Abgas abgeben können.

Der Betrieb derartiger elektrisch beheizbarer Wabenkörper ist gezielt zu veranlassen, weil diese Strom verbrauchen. Es sind deshalb Strategien erforderlich, mit welchen ein elektrischer Heizer in einem Abgassystem derart betrieben werden kann, dass er zur vorteilhaften Umsetzung der Abgase in der Abgasbehandlungsvorrichtung einerseits beiträgt und andererseits einen möglichst geringen Energieverbrauch aufweist.

Aus der WO 2005/073528 A1 ist eine Abgasbehandlungsvorrichtung bekannt die einen SCR-Katalysator, eine Heizung und eine Zufuhreinrichtung für ein Reduktionsmittel und ein Abgasrohr umfasst. Mit der Heizung kann die Abgasrohrtemperatur soweit erhöht werden, dass sich an dem Abgasrohr das Reduktionsmittel nicht ablagert.

Ausgehend von diesem Stand der Technik ist es Aufgabe der hier vorliegenden Erfindung, die im Zusammenhang mit dem Stand der Technik geschilderten technischen Probleme weiter zu lindern. Es soll insbesondere ein Verfahren zum Betrieb einer Abgasbehandlungsvorrichtung vorge-schlagen werden, welche zumindest eine Heizung und zumindest eine Zufuhreinrichtung für ein Reduktionsmittel aufweist.

Diese Aufgaben werden gelöst mit einem Verfahren gemäß den Merkmalen des Patentanspruchs 1. Weitere vorteilhafte Ausgestaltungen des Verfahrens sind in den abhängig formulierten Patentansprüchen angegeben.

Das erfindungsgemäße Verfahren zum Betrieb einer Abgasbehandlungsvorrichtung mit einem Speicher in welchem eine Menge eines Reduktionsmittel zwischengespeichert werden kann, einem SCR-Katalysator, einem Hydrolysekatalysator, zumindest einer Heizung und zumindest einer Zufuhreinrichtung für ein Reduktionsmittel umfasst zumindest die folgenden Schritte:
a) Prüfen, ob Reduktionsmittel zugeführt werden soll;
   b.1) Heizen mit der Heizung bis eine dem Hydrolysekatalysator zugeordnete erste Grenztemperatur erreicht ist, wenn eine bestimmte erste Temperatur unterhalb der ersten Grenztemperatur liegt und wenn gemäß Schritt a) Reduktionsmittel zugeführt werden soll, wobei die erste Grenztemperatur derart gewählt ist, dass zumindest eine Hydrolyse in dem Hydrolysekatalysator ablaufen kann, wenn die erste Temperatur oberhalb der ersten Grenztemperatur liegt:
   b.2) Heizen mit der Heizung bis eine dem SCR-Katalysator zugeordnete zweite Grenztemperatur erreicht ist, wenn eine bestimmte zweite Temperatur unterhalb der zweiten Grenztemperatur liegt und wenn gemäß Schritt a) kein Reduktionsmittel zugeführt werden soll, wobei die zweite Grenztemperatur derart gewählt ist, dass eine selektive katalytische Reduktion von Stickoxidverbindungen in dem SCR-Katalysator ablaufen kann, wenn die zweite Temperatur oberhalb der zweiten Grenztemperatur liegt und wobei die zweite Grenztemperatur unterhalb der ersten Grenztemperatur liegt; und
c) Zufuhr von Reduktionsmittel, wenn gemäß Schritt a) Reduktionsmittel zugeführt werden soll.

Die einzelnen Verfahrensschritte des erfindungsgemäßen Verfahrens werden während des Betriebs einer Verbrennungskraftmaschine normalerweise in der hier angegebenen Reihenfolge nach Art einer Schleife iterativ wiederholt.

Der Begriff Reduktionsmittel wird hier als Oberbegriff sowohl für ein Reduktionsmittel als auch für einen Reduktionsmittelvorläufer, wie beispielsweise Harnstoff bzw. wässrige Harnstofflösung, verwendet.

Das erfindungsgemäße Verfahren zeichnet sich dadurch aus, dass es zwei verschiedene Grenztemperaturen zur Steuerung der Heizung in der Abgasbehandlungsvorrichtung vorsieht bzw. einstellt. Verschiedene Umsetzungsvorgänge, die in einer Abgasbehandlungsvorrichtung erfolgen, erfordern unterschiedliche Mindesttemperaturen, ab welcher diese Umsetzungsvorgänge ablaufen. Es hat sich herausgestellt, dass insbesondere während der Zufuhr von flüssigem Reduktionsmittel in die Abgasbehandlungsvorrichtung regelmäßig höhere Temperaturen erforderlich sind als dies der Fall ist, wenn kein Reduktionsmittel zugeführt wird. Aus diesem Grund kann eine Heizung in einer Abgasbehandlungsvorrichtung mit verschiedenen Grenztemperaturen besonders energiesparend betrieben werden, ohne dass die Effektivität der Abgasbehandlungsvorrichtung bei der Umsetzung von Schadstoffen im Abgas beeinträchtigt wird. Die Temperatur/Grenztemperatur kann die Temperatur des Abgases und/oder die Temperatur einer mit dem Abgas in Kontakt stehenden Komponente sein. Die Temperatur kann aktuell gemessen und/oder berechnet sein. Die Grenztemperaturen können als feste Werte gespeichert und/oder (aktuell) berechnet bzw. angepasst werden.

Eine Temperatur ist insbesondere dann als "bestimmt" anzusehen, wenn diese charakteristisch für einen aktuellen Zustand (unmittelbar zuvor und/oder anschließend und/oder zeitnah) errechnet, prognostiziert und/oder gemessen wird.

Mit anderen Worten umfasst der Schritt b.1) insbesondere folgenden Prozess: Es wird zunächst eine charakteristische "erste Temperatur" bestimmt, wobei diese insbesondere für zumindest den aktuellen Wärmezustand in/an der Abgasbehandlungsvorrichtung, der Zufuhreinrichtung, der Abgasströmung und/oder des Reduktionsmittels charakteristisch ist.. Dann folgt ein Vergleich dieser so bestimmten ersten Temperatur mit einem diesem Prozess zugeordneten "ersten Grenzwert", der beispielsweise (aktuell und/oder zeitnah) errechnet, vorgegeben oder aus einem Datenspeicher ausgelesen wird. Sollte dieser Vergleich ergeben, dass die erste Temperatur unterhalb des ersten Grenzwertes liegt und eine Reduktionsmittelzugabe erfolgen soll, dann wird die Heizung aktiviert, bis für die charakteristische erste Temperatur (betreffend den selben Ort, Medium, etc. wie vorstehend geschildert) der erste Grenzwert erreicht ist.

Hinsichtlich der Generierung der "zweiten Temperatur" und der Durchführung des Vergleiches mit einem zweiten Grenzwert gemäß Schritt b.2) gilt das obige bevorzugt entsprechend.

Es ist möglich, dass die erste Temperatur und die zweite Temperatur mit einem gemeinsamen Sensor überwacht und bestimmt werden. Für den Fall, dass bei den Schritten b.1) und b.2) die selben Messorte, Referenzen, Gegenstände etc. betroffen sind, so besteht praktisch zwischen der erste Temperatur und der zweiten Temperatur kein Unterschied und eine gleichartige Bezeichnung ("die" Temperatur) kann dann vereinfachend betrachtet werden. Dies muss allerdings nicht für die entsprechenden Grenztemperaturen gelten, die somit auch in diesem Fall voneinander abweichen können.

Auch möglich ist, dass die erste Temperatur und die zweite Temperatur mit zwei verschiedenen Sensoren überwacht und bestimmt werden. Darüber hinaus kann eine getrennte Überwachung der beiden Temperaturen erfolgen, wobei die Bestimmung von der ersten Temperatur und die Bestimmung von der zweiten Temperatur an verschiedenen Stellen im Abgassystem erfolgen. Die Umsetzung des Reduktionsmittels, für welche die erste Temperatur maßgeblich ist, und die Umsetzung der Schadstoffe im Abgas, für welche die zweite Temperatur maßgeblich ist, können an verschiedenen Orten im Abgassystem stattfinden. Die Umsetzung des Reduktionsmittels findet regelmäßig dort statt, wo ein entsprechend wirksamer Katalysator vorgesehen ist. Die Umsetzung der Schadstoffe im Abgas findet ebenfalls regelmäßig dort statt, wo ein entsprechend wirksamer Katalysator vorgesehen ist. Die Überwachungen der jeweiligen Temperaturen sollte dementsprechend jeweils an diesen Orten vorgenommen werden.

Ebenso ist möglich, dass eine gemeinsame Überwachung der ersten Temperatur und der zweiten Temperatur erfolgt. Dies ist insbesondere dann vorteilhaft, wenn die Umsetzung des Reduktionsmittels und die Umsetzung der Schadstoffe im Abgas in der Abgasbehandlungsvorrichtung räumlich sehr nahe beieinander erfolgen. Die Bestimmung der ersten Temperatur und der zweiten Temperatur erfolgt dann vorzugsweise an einer Stelle im Abgassystem mit einem gemeinsamen Temperatursensor. Dann entspricht die erste Temperatur der zweiten Temperatur.

Zur Veranschaulichung des Verfahrens sei noch erwähnt, dass die Schritte b.1) und b.2) alternativ in Abhängigkeit des Ergebnisses der Prüfung in Schritt a) durchgeführt werden. Mit anderen Worten heißt das auch, dass für den Fall, dass Reduktionsmittel zugegeben werden soll, die folgenden Schritte durchgeführt werden: b.1) und c), wobei ein Heizen nur erfolgt, wenn die erste Grenztemperatur unterschritten ist. Für den Fall, dass kein Reduktionsmittel zugegeben werden soll, wird (nur) Schritt b.2) durchgeführt, wenn die zweite Grenztemperatur unterschritten ist.

Die erste Grenztemperatur ist derart gewählt, dass zumindest eine Hydrolyse in einem Hydrolysekatalysator, eine Thermolyse oder ein Verdampfen von flüssigem Reduktionsmittel ablaufen kann, wenn die erste Temperatur oberhalb der ersten Grenztemperatur liegt. Gegebenenfalls kann die erste Grenztemperatur so gewählt sein, dass mehrere der genannten Prozesse im Abgassystem eintreten.

Wie bereits ausgeführt, sind während der Zufuhr von Reduktionsmittel regelmäßig erhöhte Temperaturen notwendig. Dies liegt daran, dass das zugeführte Reduktionsmittel bzw. der zugeführte Reduktionsmittelvorläufer regelmäßig in das endgültige Reduktionsmittel umgesetzt werden muss. Beispielsweise kommt als Reduktionsmittelvorläufer eine Harnstoff-Wasser-Lösung zum Einsatz, die im Abgassystem in Ammoniak umgesetzt werden muss. Verschiedene chemische Vorgänge können zur Umsetzung des Reduktionsmittels ablaufen. Einer dieser Vorgänge ist die Hydrolyse in einem Hydrolysekatalysator. Dabei wird das Reduktionsmittel unter dem Einfluss einer katalytisch wirkenden Hydrolysebeschichtung in Ammoniak umgesetzt. Hierzu sind Temperaturen im Abgas von ca. 200 °C notwendig.

Die zur Hydrolyse einer Harnstoff-Wasser-Lösung notwendige Temperatur kann gegebenenfalls noch durch die Anwesenheit von Ammoniak [NH₃] und Stickstoffdioxid [NO₂] herabgesetzt sein. Gegebenenfalls sind dann für die Hydrolyse nur Temperaturen zwischen 130 °C und 160 °C notwendig.

Ein weiterer chemischer Vorgang, der zur Umsetzung des Reduktionsmittels führen kann, ist die Thermolyse. Die Thermolyse ist die rein thermische Umsetzung von Reduktionsmittel bzw. Reduktionsmittelvorläufer zu dem endgültigen Reduktionsmittel ohne den Einfluss einer katalytisch wirkenden Hydrolysebeschichtung. Eine 32,5% Harnstoff-Wasser-Lösung als Reduktionsmittelvorläufer wird nur zu ca. 50 % zu Ammoniak umgesetzt. Die anderen 50 % der Harnstoff-Wasser-Lösung werden zu Isocyansäure (HNCO) umgesetzt. Die zur Thermolyse von Reduktionsmittel erforderliche Temperatur ist regelmäßig höher als die zur Hydrolyse notwendige Temperatur. Für den Beginn der Thermolyse von Reduktionsmittelvorläufer gibt es keine klare Grenztemperatur. Die Thermolyse findet in einem weiten Temperaturbereich gleichzeitig mit der Hydrolyse von Reduktionsmittel statt.

Darüber hinaus kann die erste Grenztemperatur so gewählt werden, dass gewährleistet ist, dass flüssiges Reduktionsmittel verdampft. Diese Verfahrensführung ist insbesondere dann vorteilhaft, wenn ein Reduktionsmittel nicht chemisch umgesetzt werden muss, um in der Abgasbehandlungsvorrichtung wirksam zu werden, sondern lediglich vom flüssigen Aggregatzustand in den gasförmigen Aggregatzustand überführt werden muss. Bei Reduktionsmittelvorläufern wie beispielsweise auch Harnstoff-Wasser-Lösung läuft parallel zum Verdampfen auch bereits eine zumindest teilweise Umsetzung durch Thermolyse und/oder Hydrolyse ab.

Entsprechend diesen Erläuterungen ist es sinnvoll, die erste Grenztemperatur so zu wählen, dass zumindest einer der Prozesse Hydrolyse, Thermolyse oder Verdampfung von flüssigem Reduktionsmittel ablaufen können. Hiernach werden insbesondere folgende erste Grenztemperaturen vorgeschlagen:

| | |
|---|---|
| erste Grenztemperatur_Verdampfung: | größer 160 °C und bis 240 °C im Abgas an der Zufuhrstelle, |
| erste Grenztemperatur_Hydrolyse: | größer 160 °C und bis 240 °C am Hydrolysekatalysator, |
| erste Grenztemperatur_Hydrolyse (bei Anwesenheit von NH₃ und NO₂) | zwischen 130 °C und 160 °C am Hydrolysekatalysator. |

Die zweite Grenztemperatur ist derart gewählt, dass eine selektive katalytische Reduktion von Stickoxidverbindungen in einem SCR-Katalysator ablaufen kann, wenn die zweite Temperatur oberhalb der zweiten Grenztemperatur liegt. Die zweite Grenztemperatur ist für den regulären Betrieb der Abgasbehandlungsvorrichtung vorgesehen. Im regulären Betrieb einer Abgasbehandlungsvorrichtung mit einer Zufuhreinrichtung für ein Reduktionsmittel findet normalerweise permanent die selektiv katalytische Umsetzung von Stickstoffoxidverbindung mit dem Reduktionsmittel statt. Deshalb ist es sinnvoll, die zweite Grenztemperatur so zu wählen, dass die hierzu notwendigen Reaktionen problemlos ablaufen können. Die zweite Grenztemperatur kann in diesem Fall beispielsweise zwischen 130 °C und 160 °C am SCR-Katalysator betragen.

Demgemäß ist besonders bevorzugt, dass in Schritt b.1) eine erste Temperatur von mehr als 160 °C, beispielsweise ca. 180 °C, ca. 200 °C oder sogar zumindest 240 °C, eingestellt wird, wenn Reduktionsmittel zugegeben werden soll. Falls keine Reduktionsmittelzugabe geplant ist, kann demnach entsprechend Schritt b.2) auf die zweite Temperatur im Bereich von 130 °C bis 160 °C geregelt werden.

Weiterhin ist das erfindungsgemäße Verfahren vorteilhaft, wenn die Heizung nur aktiviert wird, wenn zumindest die erste Temperatur oder die zweite Temperatur und der die Abgasbehandlungsvorrichtung durchströmende Abgasmassenstrom in einem Bereich liegen, dass zumindest die erste Grenztemperatur oder die zweite Grenztemperatur durch die Heizung erreicht werden können.

Eine in einer Abgasbehandlungsvorrichtung vorgesehene elektrische Heizung hat regelmäßig nur eine begrenzte Leistungsfähigkeit. Die Leistungsfähigkeit kann beispielsweise zwischen 500 und 5.000 Watt betragen. Mit einer derartigen elektrischen Leistung sind keine beliebig großen Temperaturerhöhungen in einem Abgasstrom möglich. Die mögliche Temperaturerhöhung im Abgasstrom hängt einerseits von der bereits im Abgasstrom vorliegenden Temperatur der Abgase sowie andererseits von dem Massenstrom des Abgases ab. Je größer der Abgasmassenstrom ist, umso höher ist die in den Abgasmassenstrom einzubringende Energie, um eine bestimmte Temperaturerhöhung zu erreichen. Aus diesem Grund kann es sein, dass es ausgehend von einer bestimmten vorliegenden ersten Temperatur oder zweiten Temperatur unwirtschaftlich oder sogar unmöglich ist, die entsprechende erste Grenztemperatur oder die entsprechende zweite Grenztemperatur zu erreichen. Es kann deshalb vorteilhaft sein auf ein Aufheizen des Abgases zu verzichten, wenn derartige Situationen vorliegen. Mit der hier angegebenen Abbruchbedingung für das Verfahren kann ein unnötiger Einsatz von Heizenergie vermieden werden.

Die Abgasbehandlungsvorrichtung weist einen Speicher auf, in welchem eine Menge an Reduktionsmittel zwischengespeichert werden kann.

Ein Speicher zur Zwischenspeicherung einer Menge an Reduktionsmittel kann beispielsweise eine Speicherbeschichtung an einem vom Abgas kontaktierten Träger sein, die in der Lage ist, Ammoniak insbesondere in einem bestimmten Temperaturbereich zu speichern. Ein derartiger Speicher kann auch zusammen mit der zur selektiven katalytischen Reduktion vorgesehenen Beschichtung in einem Wabenkörper vorgesehen sein. Dies ist auch in Form einer gemischten Beschichtung möglich, die sowohl Ammoniak speichernde Anteile, als auch die selektive katalytische Reduktion unterstützende Anteile aufweist. Ein derartiger Speicher ist bevorzugt in der Lage, beispielsweise für einen Betriebszeitraum zwischen einer Minute und einer Stunde, vorzugsweise zwischen 5 Minuten und 30 Minuten, ausreichend Reduktionsmittel zu speichern, damit die selektive katalytische Reduktion in der Abgasbehandlungsvorrichtung ohne erneute Zufuhr von Reduktionsmittel erfolgen kann.

Durch eine derartige Zwischenspeicherung von Reduktionsmittel in der Abgasbehandlungsvorrichtung kann erreicht werden, dass besonders günstige Zeitpunkte zur Zufuhr von Reduktionsmittel verwendet werden können.

Weiterhin vorteilhaft ist das obige Verfahren, wenn zunächst die im Speicher gespeicherte Menge an Reduktionsmittel ermittelt und in Schritt a) festgestellt wird, dass eine Zufuhr von Reduktionsmittel erfolgen soll, wenn die gespeicherte Menge an Reduktionsmittel unterhalb einer Mindestspeichermenge liegt.

Die in einem Speicher gespeicherte Menge an Reduktionsmittel kann mit geeigneten Sensoren bestimmt und/oder berechnet werden. Die gespeicherte Menge kann beispielsweise mit einem kapazitiven Sensor gemessen werden, der in den Speicher eingelassen ist und seine Kapazität in Abhängigkeit der gespeicherten Menge an Reduktionsmittel ändert.

Weiterhin vorteilhaft ist das erfindungsgemäße Verfahren, wenn die Zufuhreinrichtung für Reduktionsmittel in der Abgasbehandlungsvorrichtung das Reduktionsmittel wahlweise flüssig oder gasförmig zuführen kann und in Schritt a) auch geprüft wird, ob die erste Grenztemperatur mit der Heizung erreichbar ist, und in Schritt c) gasförmig zugeführt wird, wenn die erste Grenztemperatur nicht erreichbar ist. Bevorzugt erfolgt die gasförmige Zufuhr von Reduktionsmittel dann, wenn die Mindestspeichermenge an Reduktionsmittel in einem Speicher ohne die gasförmige Zufuhr unterschritten werden würde oder bereits unterschritten ist.

Die gasförmige Zufuhr von Reduktionsmittel erfordert zusätzlichen Energiebedarf zur Verdampfung des Reduktionsmittels. Andererseits kann durch Zufuhr von gasförmigem Reduktionsmittel eine besonders schnelle Bereitstellung von Reduktionsmittel in der Abgasbehandlungsvorrichtung realisiert werden. Gasförmiges Reduktionsmittel wird einerseits sehr schnell in das endgültige Reduktionsmittel (beispielsweise Ammoniak) umgesetzt, weil die zur Umsetzung notwendige Energie im gasförmigen Reduktionsmittel in Form von Wärme bereits vorhanden ist, andererseits gelangt gasförmiges Reduktionsmittel auch sehr schnell in den SCR-Katalysator und kann sich nicht in Form von Tropfen auf der Abgasleitung ablagern. Reduktionsmittel bzw. Reduktionsmittelvorläufer kann auch bereits vor der Zufuhr in das endgültige Reduktionsmittel umgesetzt werden. Dies kann durch eine Hydrolyse oder eine Thermolyse geschehen.

Wenn eine gasförmige Zufuhr von Reduktionsmittel möglich ist, beispielsweise mittels einer abgasexternen Erhitzung des Reduktionsmittels in einem separaten Verdampfer, kann sichergestellt werden, dass trotz besonders niedriger Temperaturen im Abgassystem über einen langen Zeitraum die selektive katalytische Reduktion im SCR-Katalysator effizient und zuverlässig ablaufen kann.

Weiterhin vorteilhaft ist das erfindungsgemäße Verfahren, wenn in Schritt a) eine dritte Temperatur in der Abgasbehandlungsvorrichtung ermittelt wird und weiter festgestellt wird, dass eine Zufuhr von Reduktionsmittel erfolgen soll, wenn die dritte Temperatur in der Abgasbehandlungsvorrichtung eine dritte Grenztemperatur überschreitet. Auch die dritte Temperatur kann der ersten Temperatur und/oder der zweiten Temperatur entsprechen (also den gleichen Ort in der Abgasbehandlungsvorrichtung betreffen) und gegebenenfalls mit einem gemeinsamen Temperatursensor mit der ersten Temperatur und/oder der zweiten Temperatur bestimmt werden.

Hier wird nun vorgeschlagen, die Zufuhr von Reduktionsmittel nicht nur dann auszulösen, wenn in einem Speicher, in welchem Reduktionsmittel zwischengespeichert werden kann, eine Mindestspeichermenge unterschritten wird, sondern auch dann, wenn sich aufgrund des Erreichens einer besonders hohen dritten Temperatur in der Abgasbehandlungsvorrichtung eine besonders energiesparende Zufuhrmöglichkeit für Reduktionsmittel ergibt. Bevorzugt ist die dritte Temperatur so gewählt, dass zur Zufuhr von Reduktionsmittel die Heizung überhaupt nicht eingesetzt werden muss. Ein in der Abgasbehandlungsvorrichtung vorhandener Speicher für Reduktionsmittel kann so besonders energiesparend aufgefüllt werden. Die notwendige Heizleistung für den Heizer wird durch die Wahl von geeigneten Heizzeitpunkten und Zufuhrzeitpunkten mit ohnehin erhöhten Temperaturen reduziert.

Nach einer weiteren vorteilhaften Ausgestaltung des erfindungsgemäßen Verfahrens beträgt der Zeitanteil, während dem eine Zufuhr von Reduktionsmittel erfolgt, höchstens 25 % der Gesamtbetriebszeit der Verbrennungskraftmaschine. Vorzugsweise beläuft sich der Zeitanteil sogar auf höchstens 10 % der Gesamtbetriebszeit der Verbrennungskraftmaschine oder sogar auf höchstens 5 %. Wenn ein Speicher in der Abgasbehandlungsvorrichtung gewährleistet, dass Reduktionsmittel für einen ausreichenden Betriebszeitraum zwischengespeichert ist, können besondere Phasen im Betrieb der Verbrennungskraftmaschine mit besonders erhöhter Abgastemperatur, beispielsweise Beschleunigungsphasen des Kraftfahrzeuges, verwendet werden, um das notwendige Reduktionsmittel für den SCR-Katalysator zuzuführen.

Weiterhin vorteilhaft ist ein Kraftfahrzeug, aufweisend eine Verbrennungskraftmaschine und eine Abgasbehandlungsvorrichtung, aufweisend eine Heizung, eine Zufuhreinrichtung für ein Reduktionsmittel sowie ein Steuergerät, wobei das Steuergerät zur Durchführung des erfindungsgemäßen Verfahrens eingerichtet ist. Das erfindungsgemäße Verfahren kann beispielsweise nach Art einer Software in der Motorsteuerung eines Kraftfahrzeuges realisiert sein, welches in entsprechender Weise mit Sensoren kommuniziert und/oder die Heizung betreibt.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Die Figuren sind schematisch und benennen gleiche Bauteile mit gleichen Bezugszeichen. Es zeigen:
- Fig. 1:: ein Kraftfahrzeug, aufweisend eine Abgasbehandlungsvorrichtung, die für die Durchführung des erfindungsgemäßen Verfahrens eingerichtet ist,
- Fig. 2:: ein weiteres Kraftfahrzeug, aufweisend eine alternative Abgasbehandlungsvorrichtung, die für die Durchführung des erfindungsgemäßen Verfahrens eingerichtet ist,
- Fig. 3:: ein Diagramm der Abgastemperaturen während des Betriebs des erfindungsgemäßen Verfahrens mit einer ersten Verfahrensführung,
- Fig. 4:: ein weiteres Diagramm der Abgastemperaturen während des Betriebs des erfindungsgemäßen Verfahrens mit einer zweiten Verfahrensführung, und
- Fig. 5:: ein Blockdiagramm, welches den Ablauf des erfindungsgemäßen Verfahrens darstellt.

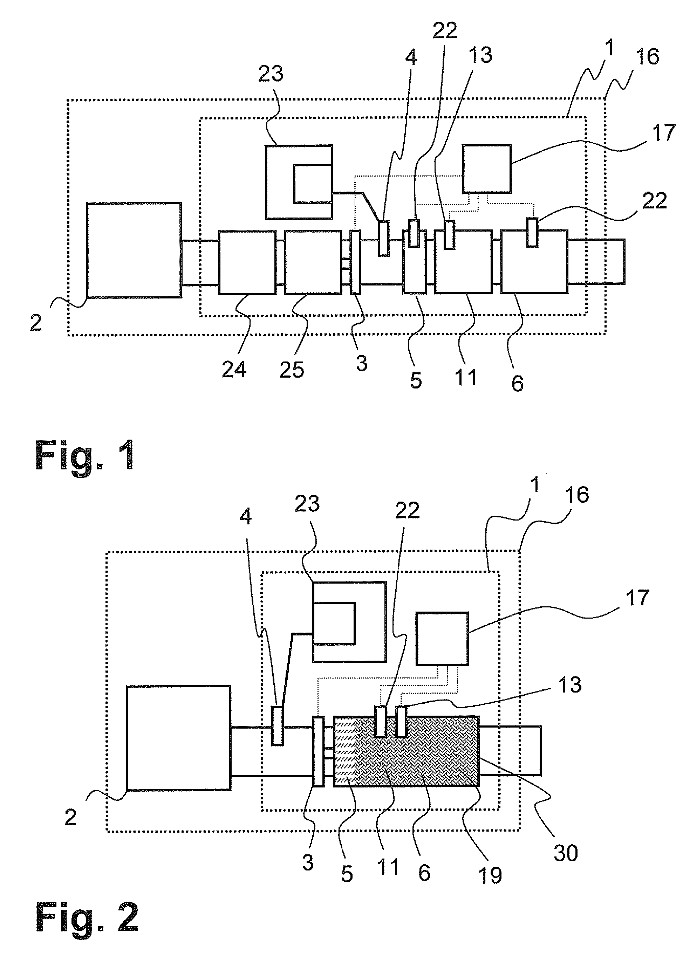

In Fig. 1 ist ein Kraftfahrzeug 16, aufweisend eine Verbrennungskraftmaschine 2 sowie eine an die Verbrennungskraftmaschine 2 angeschlossene Abgasbehandlungsvorrichtung 1, dargestellt. Die Abgasbehandlungsvorrichtung 1 weist hintereinander einen Oxidationskatalysator 24, einen Partikelfilter 25, eine Heizung 3, eine Zufuhreinrichtung 4 für Reduktionsmittel (z. B. Harnstoff), einen Hydrolysekatalysator 5, einen Speicher 11 sowie einen SCR-Katalysator 6 auf. Im SCR-Katalysator 6 ist ein Temperatursensor 22 vorgesehen. Im Hydrolysekatalysator 5 ist ebenfalls ein Temperatursensor 22 vorgesehen. Im Speicher 11 ist ein Stickstoffsensor 13 vorgesehen, mit welchem die Beladung des Speichers 11 mit Reduktionsmittel überwacht werden kann. Die Zufuhreinrichtung 4 wird über eine Leitung aus dem Reduktionsmittel-Dosiersystem 23 mit Reduktionsmittel versorgt. Der Heizer 3 wird in Abhängigkeit der von den Temperatursensoren 22 und dem Stickstoffsensor 13 ermittelten Daten von einem Steuergerät 17 gesteuert. Der Oxidationskatalysator 24 und der Partikelfilter 25 dienen der Vorbehandlung der Abgase der Verbrennungskraftmaschine 2. Gegebenenfalls kann die Zufuhreinrichtung 4 in Abgasströmungsrichtung, ausgehend von der Verbrennungskraftmaschine 2 auch vor dem Partikelfilter 25 und/oder dem Oxidationskatalysator 24, angeordnet sein. Auch die Heizung 3 kann in Abgasströmungsrichtung vor dem Partikelfilter 25 und/oder dem Oxidationskatalysator 24 angeordnet sein.

Fig. 2 zeigt ebenfalls ein Kraftfahrzeug 16, aufweisend eine Verbrennungskraftmaschine 2 sowie eine Abgasbehandlungsvorrichtung 1. In dieser Abgasbehandlungsvorrichtung 1 ist, ausgehend von der Verbrennungskraftmaschine 2, hintereinander zunächst eine Zufuhreinrichtung 4 für ein Reduktionsmittel vorgesehen, die von einem Reduktionsmittel-Dosiersystem 23 mit Reduktionsmittel versorgt wird. Im Anschluss daran sind ein Heizer 3 sowie eine Abgasbehandlungskomponente 30 angeordnet. In der Abgasbehandlungskomponente 30 sind verschiedene Funktionen gemeinsam realisiert. Die Abgasbehandlungskomponente 30 beinhaltet einen Hydrolysekatalysator 5 sowie einen Speicher 11 für ein Reduktionsmittel und einen SCR-Katalysator 6. Der SCR-Katalysator 6 und der Speicher 11 sind in einer gemeinsamen Beschichtung 19 realisiert. Die Beschichtung 19 enthält Reduktionsmittel speichernde Anteile, die den Speicher 11 bilden, sowie die selektive katalytische Reduktion begünstigende Anteile, die den SCR-Katalysator 6 bilden. In der Abgasbehandlungskomponente 30 sind ein Temperatursensor 22 sowie ein Stickstoffsensor 13 vorgesehen. Mit dem Stickstoffsensor 13 kann die Beladung des Speichers 11 mit Reduktionsmittel bestimmt werden. Die Heizung 3 wird von dem Steuergerät 17 in Abhängigkeit der von dem Temperatursensor 22 und dem Stickstoffsensor 13 ermittelten Daten gesteuert.

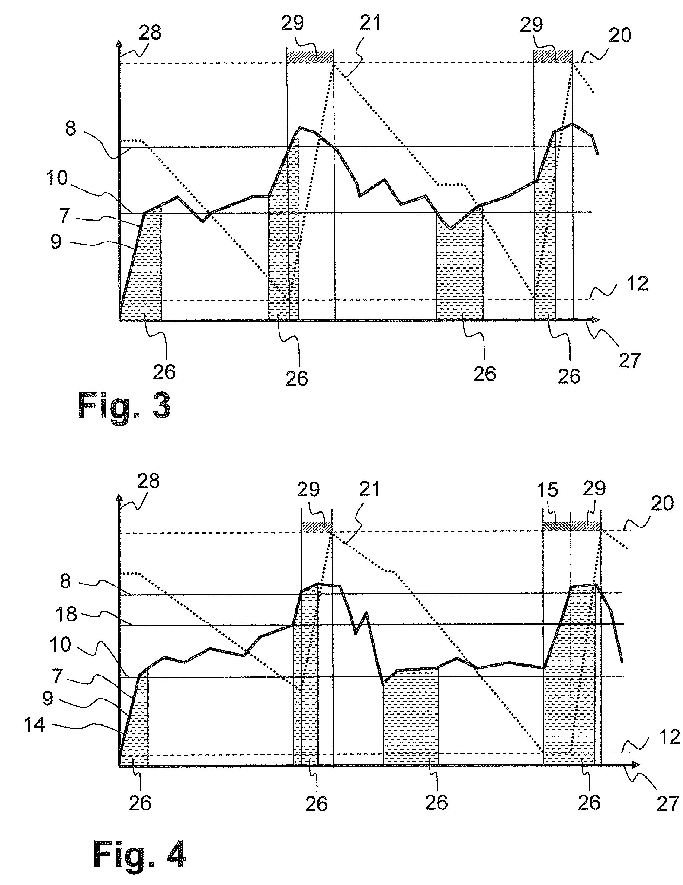

In den Fig. 3 und 4 sind jeweils Diagramme der Temperatur in einer Abgasbehandlungsvorrichtung während des Ablaufs des erfindungsgemäßen Verfahrens dargestellt. Da die Fig. 3 und 4 viele Gemeinsamkeiten aufweisen, werden sie hier zunächst gemeinsam erläutert. In beiden Figuren sind jeweils über die Zeitachse 27 die Verläufe der ersten Temperatur 7 und der zweiten Temperatur 9 in einer Abgasbehandlungsvorrichtung aufgetragen. Der Wert der ersten Temperatur 7 und der zweiten Temperatur 9 sind auf der Temperaturachse 28 abzulesen. Die erste Temperatur 7 und die zweite Temperatur 9 entsprechen sich hier. In der Fig. 4 entspricht auch die zusätzlich überwachte dritte Temperatur 14 der ersten Temperatur 7 und der zweiten Temperatur 9. Die Temperaturen, die hier dargestellt sind, wurden beispielsweise mit einem gemeinsamen Temperatursensor ermittelt. Im Hintergrund jeweils gestrichelt angedeutet, ist die Beladung 21 eines Speichers für Reduktionsmittel in der Abgasbehandlungsvorrichtung. Auch dargestellt sind die erste Grenztemperatur 8 und die zweite Grenztemperatur 10, jeweils als waagerechte Linien.

Zu Beginn (links in den Diagrammen) sind die erste Temperatur 7 und die zweite Temperatur 9 jeweils sehr niedrig. Dies kann beispielsweise auf den Beginn des Betriebs einer Verbrennungskraftmaschine zurückzuführen sein. Die Abgasbehandlungsvorrichtung ist hier noch kalt und muss zunächst erwärmt werden. Zur Erhöhung der ersten Temperatur 7 und der zweiten Temperatur 9 oberhalb einer vorgegebenen zweiten Grenztemperatur 10 erfolgt ein Heizvorgang 26. Sobald die zweite Temperatur 9 die zweite Grenztemperatur 10 erreicht hat, erfolgt der Betrieb der Verbrennungskraftmaschine ohne weiteres Heizen. Der SCR-Katalysator setzt nun Schadstoffe im Abgas mit Reduktionsmittel um. Dies ist auch daran zu erkennen, dass die Beladung 21 eines Speichers mit Reduktionsmittel kontinuierlich abfällt. Sobald die Beladung 21 eine Mindestspeichermenge 12 erreicht, wird erneut ein Heizvorgang 26 eingeleitet. Die Mindestspeichermenge 12 ist als gestrichelte waagerechte Linie angedeutet. Dies entspricht Verfahrensschritt a), in welchem festgestellt wird, dass eine Zufuhr von Reduktionsmittel erfolgen soll. Sobald die erste Temperatur 7 durch den Heizvorgang 26 auf einen Wert oberhalb der ersten Grenztemperatur 8 angehoben wurde, erfolgt eine flüssige Zufuhr 29 von Reduktionsmittel bis die Beladung 21 des Speichers eine maximale Speichermenge 20 erreicht. Die maximale Speichermenge 20 ist ebenfalls als gestrichelte waagerechte Linie angedeutet. Sobald die maximale Speichermenge 20 erreicht ist, erfolgt wiederum ein regulärer Betrieb der Abgasbehandlungsvorrichtung, in welchem die zweite Grenztemperatur 10 maßgeblich ist. Die zweite Temperatur 9 soll nun wieder nicht unter die zweite Grenztemperatur 10 fallen. Ist dies dennoch der Fall, wird erneut ein Heizvorgang 26 eingeleitet. Dies ist in Fig. 3 und in Fig. 4 jeweils auch daran zu erkennen, dass nach der ersten flüssigen Zufuhr 29 ein weiterer Heizvorgang 26 dargestellt ist, während dem die Beladung des Speichers mit Reduktionsmittel konstant bleibt. Dies deutet darauf hin, dass die zweite Temperatur 9 die zweite Grenztemperatur 10 unterschritten hat und die Gefahr bestünde, dass keine selektive katalytische Reduktion in der Abgasbehandlungsvorrichtung mehr ablaufen kann. Wenn die Beladung 21 des Speichers wieder die Mindestspeichermenge 12 erreicht hat bzw. zu unterschreiten droht, erfolgt ein erneuter Heizvorgang 26 der Abgasbehandlungsvorrichtung, so dass die erste Temperatur 7 die erste Grenztemperatur 8 erreicht. Dann wird eine erneute flüssige Zufuhr 29 von Reduktionsmittel eingeleitet.

In Fig. 4 sind noch einige spezielle Betriebsmodi des erfindungsgemäßen Verfahrens dargestellt. Die flüssige Zufuhr 29 erfolgt hier nicht erst, wenn die Beladung 21 des Speichers für Reduktionsmittel die Mindestspeichermenge 12 erreicht hat bzw. unterschreitet. Die flüssige Zufuhr 29 wird hier vielmehr dadurch ausgelöst, dass eine dritte Temperatur 14 der Abgase eine dritte Grenztemperatur 18 erreicht. Die dritte Temperatur 14 entspricht hier der ersten Temperatur 7 und der zweiten Temperatur 9. Auf diese Art und Weise kann eine besonders energieeffiziente Auffüllung des Speichers für Reduktionsmittel erreicht werden. Vor der zweiten flüssigen Zufuhr 29 in Fig. 4 ist zudem eine gasförmige Zufuhr 15 dargestellt. Diese gasförmige Zufuhr 15 von Reduktionsmittel wird hier ausgelöst, weil einerseits die Beladung 21 eines Speichers für Reduktionsmittel in der Abgasbehandlungsvorrichtung so niedrig ist, dass die Gefahr bestünde, dass keine vollständige selektive katalytische Reduktion mehr erfolgen kann, und gleichzeitig die erste Temperatur 7 so niedrig ist, dass ein schnelles Beladen des Speichers durch eine flüssige Zufuhr 29 nicht möglich ist. Durch die gasförmige Zufuhr 15 kann dies jedoch ausgeglichen werden. Sobald durch den parallel erfolgenden Heizvorgang 26 die erste Temperatur 7 die erste Grenztemperatur 8 erreicht hat, erfolgt wiederum eine flüssige Zufuhr 29 von Reduktionsmittel, durch welche die Beladung 21 eines Speichers für ein Reduktionsmittel in der Abgasbehandlungsvorrichtung auch aufgefüllt werden kann.

Auf die gasförmige Zufuhr 15 von Reduktionsmittel wird hier beispielsweise nur zurückgegriffen, wenn ein sicherer Betrieb des SCR-Katalysators mit Reduktionsmittel aus einem Speicher in der Abgasbehandlungsvorrichtung und/oder mit flüssig zugeführtem Reduktionsmittel nicht gewährleistet werden kann.

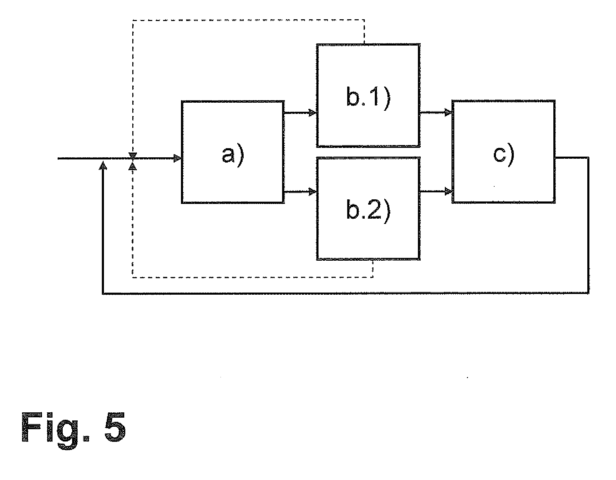

Fig. 5 zeigt ein Ablaufdiagramm des erfindungsgemäßen Verfahrens. In Fig. 5 sind die Verfahrensschritte a), b1), b2) und c) dargestellt. Es ist auch erkennbar, dass das erfindungsgemäße Verfahren nach Art einer Schleife wiederholt ausgeführt wird. Entsprechend der Feststellung in Schritt a), ob eine Zufuhr von Reduktionsmittel erfolgen soll oder nicht, wird wahlweise Schritt b.1) oder Schritt b.2) eingeleitet. Ebenso ist durch die gestrichelten Pfeile angedeutet, dass für den Fall, dass die aktuelle Temperatur zumindest der Grenztemperatur entspricht, der Schritt c) (das Heizen) umgangen wird. Grundsätzlich kann das Verfahren mit einer zeitlichen Verzögerung und/oder auf Anfrage wieder gestartet werden.

### Bezugszeichenliste

- 1: Abgasbehandlungsvorrichtung
- 2: Verbrennungskraftmaschine
- 3: Heizung
- 4: Zufuhreinrichtung
- 5: Hydrolysekatalysator
- 6: SCR-Katalysator
- 7: erste Temperatur
- 8: erste Grenztemperatur
- 9: zweite Temperatur
- 10: zweite Grenztemperatur
- 11: Speicher
- 12: Mindestspeichermenge
- 13: Stickstoffsensor
- 14: dritte Temperatur
- 15: gasförmige Zufuhr
- 16: Kraftfahrzeug
- 17: Steuergerät
- 18: dritte Grenztemperatur
- 19: Beschichtung
- 20: maximale Speichermenge
- 21: Beladung
- 22: Temperatursensor
- 23: Reduktionsmittel-Dosiersystem
- 24: Oxidationskatalysator
- 25: Partikelfilter
- 26: Heizvorgang
- 27: Zeitachse
- 28: Temperaturachse
- 29: flüssige Zufuhr
- 30: Abgasbehandlungskomponente

## Patentansprüche

1. Verfahren zum Betrieb einer Abgasbehandlungsvorrichtung (1) mit einem Speicher (11) in welchem eine Menge eines Reduktionsmittels zwischengespeichert werden kann, einem SCR-Katalysator (6), einem Hydrolysekatalysator (5), zumindest einer Heizung (3) und zumindest einer Zufuhreinrichtung (4) für ein Reduktionsmittel, welches zumindest die folgenden Schritte umfasst:
a) Prüfen, ob Reduktionsmittel zugeführt werden soll;
b.1) Heizen mit der Heizung (3) bis eine dem Hydrolysekatalysator (5) zugeordnete erste Grenztemperatur (8) erreicht ist, wenn eine bestimmte erste Temperatur (7) unterhalb der ersten Grenztemperatur (8) liegt und wenn gemäß Schritt a) Reduktionsmittel zugeführt werden soll, wobei die erste Grenztemperatur (8) derart gewählt ist, dass zumindest eine Hydrolyse in dem Hydrolysekatalysator (5) ablaufen kann, wenn die erste Temperatur (7) oberhalb der ersten Grenztemperatur (8) liegt;
b.2) Heizen mit der Heizung (3) bis eine dem SCR-Katalysator (6) zugeordnete zweite Grenztemperatur (10) erreicht, wenn eine bestimmte zweite Temperatur (9) unterhalb der zweiten Grenztemperatur (10) liegt und wenn gemäß Schritt a) kein Reduktionsmittel zugeführt werden soll, wobei die zweite Grenztemperatur (10) derart gewählt ist, dass eine selektive katalytische Reduktion von Stickoxidverbindungen in dem SCR-Katalysator (6) ablaufen kann, wenn die zweite Temperatur (9) oberhalb der zweiten Grenztemperatur (10) liegt und wobei die zweiten Grenztemperatur (10) unterhalb der ersten Grenztemperatur (8) liegt: und
c) Zufuhr von Reduktionsmittel, wenn gemäß Schritt a) Reduktionsmittel zugeführt werden soll.

2. Verfahren nach Patentanspruch 1, wobei die Heizung (3) nur aktiviert wird, wenn zumindest die erste Temperatur (7) oder die zweite Temperatur (9) und der die Abgasbehandlungsvorrichtung (1) durchströmende Abgasmassenstrom in einem Bereich liegen, dass zumindest die erste Grenztemperatur (8) oder die zweite Grenztemperatur (10) durch die Heizung (3) erreicht werden können.

3. Verfahren nach Patentanspruch 1 oder 2, wobei zunächst eine im Speicher (11) gespeicherte Menge an Reduktionsmittel ermittelt und in Schritt a) festgestellt wird, dass eine Zufuhr von Reduktionsmittel erfolgen soll, wenn die gespeicherte Menge an Reduktionsmittel unterhalb einer Mindestspeichermenge (12) liegt.

4. Verfahren nach einem der vorhergehenden Patentansprüche, wobei die Zufuhreinrichtung (4) für Reduktionsmittel der Abgasbehandlungsvorrichtung (1) Reduktionsmittel wahlweise flüssig oder gasförmig zuführen kann, und in Schritt a) auch geprüft wird, ob die erste Grenztemperatur (8) mit der Heizung (3) erreichbar ist, und in Schritt c) gasförmig zugeführt wird, wenn die erste Grenztemperatur (8) nicht erreichbar ist.

5. Verfahren nach einem der vorhergehenden Patentansprüche, wobei in Schritt a) eine dritte Temperatur (14) in der Abgasbehandlungsvorrichtung (1) ermittelt wird und weiter festgelegt wird, dass eine Zufuhr von Reduktionsmittel erfolgen soll, wenn die dritte Temperatur (14) in der Abgasbehandlungsvorrichtung (1) eine dritte Grenztemperatur (18) überschreitet.

6. Verfahren nach einem der vorhergehenden Patentansprüche, wobei der Zeitanteil, während dem eine Zufuhr von Reduktionsmittel erfolgt, höchstens 25 % der Gesamtbetriebszeit der Verbrennungskraftmaschine (2) beträgt.

7. Kraftfahrzeug (16), aufweisend eine Verbrennungskraftmaschine (2) und eine Abgasbehandlungsvorrichtung mit einem Speicher (11), aufweisend einen SCR-Katalysator (6), einen Hydrolysekatalysator (5), eine Heizung (3), eine Zufuhreinrichtung (4) für ein Reduktionsmittel sowie ein Steuergerät (17), wobei das Steuergerät (17) zur Durchführung eines Verfahrens nach einem der vorhergehenden Patentansprüche eingerichtet ist.

## Claims

1. Method for operating an exhaust-gas treatment device (1) having a store (11) in which a quantity of a reducing agent can be temporarily stored, an SCR catalytic converter (6), a hydrolysis catalytic converter (5), at least one heater (3) and at least one supply device (4) for a reducing agent, which method comprises at least the following steps:
a) checking whether reducing agent should be supplied;
b.1) heating by means of the heater (3) until a first threshold temperature (8), assigned to the hydrolysis catalytic converter (5), is reached, if a determined first temperature (7) lies below the first threshold temperature (8) and if, according to step a), reducing agent should be supplied, wherein the first threshold temperature (8) is selected such that at least a hydrolysis in the hydrolysis catalytic converter (5) can take place if the first temperature (7) lies above the first threshold temperature (8);
b.2) heating by means of the heater (3) until a second threshold temperature (10), assigned to the SCR catalytic converter (6), is reached, if a determined second temperature (9) lies below the second threshold temperature (10) and if, according to step a), no reducing agent should be supplied, wherein the second threshold temperature (10) is selected such that a selective catalytic reduction of nitrogen oxide compounds in the SCR catalytic converter (6) can take place if the second temperature (9) lies above the second threshold temperature (10) and wherein the second threshold temperature (10) lies below the first threshold temperature (8); and
c) supplying reducing agent if, according to step a), reducing agent should be supplied.

2. Method according to Patent Claim 1, wherein the heater (3) is activated only if at least the first temperature (7) or the second temperature (9) and the exhaust-gas mass flow passing through the exhaust-gas treatment device (1) lie in a range such that at least the first threshold temperature (8) or the second threshold temperature (10) can be attained by means of the heater (3).

3. Method according to Patent Claim 1 or 2, wherein firstly a quantity of reducing agent stored in the store (11) is determined, and in step a) it is established that a supply of reducing agent should take place if the stored quantity of reducing agent lies below a minimum storage quantity (12).

4. Method according to one of the preceding patent claims, wherein the supply device (4) for reducing agent can supply reducing agent to the exhaust-gas treatment device (1) selectively in liquid or gaseous form, and in step a), it is also checked whether the first threshold temperature (8) can be attained by means of the heater (3), and in step c), a gaseous supply is provided if the first threshold temperature (8) cannot be reached.

5. Method according to one of the preceding patent claims, wherein in step a), a third temperature (14) in the exhaust-gas treatment device (1) is determined, and it is furthermore defined that a supply of reducing agent should take place if the third temperature (14) in the exhaust-gas treatment device (1) exceeds a third threshold temperature (18).

6. Method according to one of the preceding patent claims, wherein the time segment during which a supply of reducing agent takes place amounts to at most 25% of the overall operating time of the internal combustion engine (2).

7. Motor vehicle (16) having an internal combustion engine (2) and an exhaust-gas treatment device with a store (11), having an SCR catalytic converter (6), a hydrolysis catalytic converter (5), a heater (3), a supply device (4) for a reducing agent and a control unit (17), wherein the control unit (17) is set up for carrying out a method according to one of the preceding patent claims.

## Revendications

1. Procédé pour faire fonctionner un dispositif (1) de traitement de gaz d'échappement comprenant un réservoir (11), dans lequel une quantité d'un agent réducteur peut être stockée intermédiairement, un pot catalytique (6) SCR, un pot catalytique (5) d'hydrolyse, au moins un chauffage (3) et au moins un dispositif (4) d'apport d'un agent réducteur, qui comprend au moins les stades suivants :
a) contrôle du point de savoir si de l'agent réducteur doit être apporté ;
b.1) chauffage par le chauffage (3) jusqu'à ce qu'une première température (8) limite associée au pot catalytique (5) d'hydrolyse soit atteinte, si une première température (7) définie est inférieure à la première température limite et lorsque suivant le stade a) de l'agent réducteur doit être apporté, la première température (8) limite étant choisie de manière à ce qu'au moins une hydrolyse puisse se dérouler dans le pot catalytique (5) d'hydrolyse si la première température (7) est supérieure à la première température (8) limite ;
b.2) chauffage par le chauffage (3) jusqu'à ce qu'une deuxième température (10) limite associée au pot catalytique (6) SCR soit atteinte, lorsqu'une deuxième température (9) définie est inférieure à la deuxième température (10) limite et si suivant le stade a) un agent réducteur ne doit pas être apporté, la deuxième température (10) étant choisie de manière à ce qu'une réduction catalytique sélective des composés d'oxyde d'azote puissent se dérouler dans le catalyseur (6) SCR, si la deuxième température (9) est supérieure à la deuxième température (10) limite et dans lequel la deuxième température (10) limite est inférieure à la première température (8) limite et
c) apport d'agent réducteur si suivant le stade a) de l'agent réducteur doit être apporté.

2. Procédé suivant la revendication 1, dans lequel on n'active le chauffage (3) que si au moins la première température (7) ou la deuxième température (9) et le courant massique passant dans le dispositif (1) de traitement de gaz d'échappement se trouvent dans une plage, de sorte qu'au moins la première température (8) limite ou la deuxième température (10) limite peut être atteinte par le chauffage (3).

3. Procédé suivant la revendication 1 ou 2, dans lequel on détermine d'abord une quantité d'agent réducteur stockée dans le réservoir (11) et on constate au stade a) si un apport d'agent réducteur doit être effectué, si la quantité d'agent réducteur stockée est inférieure à une quantité (12) minimum dans le réservoir.

4. Procédé suivant l'une des revendications précédentes, dans lequel le dispositif (4) d'apport d'agent réducteur du dispositif (1) de traitement de gaz d'échappement peut apporter de l'agent réducteur au choix liquide ou gazeux et au stade a) on contrôle aussi si l'on peut atteindre la première température (8) limite par le chauffage (3) et au stade c) on fait un apport sous forme gazeuse si la première température (8) limite ne peut pas être atteinte.

5. Procédé suivant l'une des revendications précédentes, dans lequel au stade a) on détermine une troisième température (14) dans le dispositif (1) de traitement de gaz d'échappement et on constate en outre que l'on doit effectuer un apport d'agent réducteur, si la troisième température (14) dans le dispositif (1) de traitement de gaz d'échappement dépasse une troisième température (18) limite.

6. Procédé suivant l'une des revendications précédentes, dans lequel la partie du temps pendant laquelle un apport d'agent réducteur s'effectue représente au plus 25ô du temps total de fonctionnement du moteur (2) à combustion interne.

7. Véhicule (16) automobile comportant un moteur (2) à combustion interne et un dispositif de traitement de gaz d'échappement ayant un réservoir (11) comportant un pot catalytique (6) SCR, un pot catalytique (5) d'hydrolyse, un chauffage (3), un dispositif (4) d'apport d'un agent réducteur, ainsi qu'un appareil (17) de commande, l'appareil (17) de commande étant conçu pour effectuer un procédé suivant l'une des revendications précédentes.
